# EUROPEAN PATENT SPECIFICATION

(11) **EP 2 720 780 B1**
(45) Date of publication and mention of the grant of the patent: **25.05.2016**
(21) Application number: 12725465.4
(22) Date of filing: 05.06.2012
(51) Int. Cl.: B01D 53/62, B01D 53/14, C10L 3/10

(54) **PROCESS FOR SEPARATING CO2 FROM A GASEOUS STREAM**
VERFAHREN ZUM ABTRENNEN VON CO2 AUS EINEM GASSTROM
PROCÉDÉ DE SÉPARATION DU CO2 D'UN EFFLUENT GAZEUX

(30) Priority: 14.06.2011 EP 11004826
(43) Date of publication of application: 23.04.2014
(73) Proprietor: VTU Holding GmbH, 8074 Grambach (AT)
(72) Inventor: JANICZEK, Peter, A-5280 Braunau (AT); KALB, Roland, A-8700 Leoben (AT)
(74) Representative: Schwarz, Albin
(86) International application number: PCT/EP2012/060589
(87) International publication number: WO 2012/171831

(56) References cited:
- EP-A1- 2 087 930
- WO-A1-2011/011830
- US-A1- 2006 251 558
- MARK B. SHIFLETT ET AL: "Phase Behavior of Carbon Dioxide in Ionic Liquids: [emim][Acetate], [emim][Trifluoroacetate], and [emim][Acetate] + [emim][Trifluoroacetate] Mixtures", JOURNAL OF CHEMICAL & ENGINEERING DATA, vol. 54, no. 1, 8 January 2009 (2009-01-08), pages 108-114, XP55036047, ISSN: 0021-9568, DOI: 10.1021/je800701j
- JESSICA BLATH ET AL: "Chemisorption of carbon dioxide in imidazolium based ionic liquids with carboxylic anions", CHEMICAL ENGINEERING JOURNAL, vol. 181-182, 1 February 2012 (2012-02-01) , pages 152-158, XP55036048, ISSN: 1385-8947, DOI: 10.1016/j.cej.2011.11.042

## Description

The present invention is directed to a process for separating or removing CO₂ (carbon dioxide) from a gaseous stream, such as natural gas.

Carbon dioxide (CO₂) is an undesired diluent that is present in natural gas and other gas sources. Separation or removal of CO₂ is a common separation process in natural gas processing and is often required to improve the fuel quality of the natural gas.

Commonly and industrially used methods to extract carbon dioxide from the inert component are based on chemical or physical absorption, sometimes on a combination of both. Furthermore, adsorption or membranes are also used.

The process is often called gas-sweetening, because CO₂ (next to some others) is often described as sour-gas. Removal is essential, because CO₂ reduces the heat value of the sales gas and will also negatively influence the environment, when exposed uncontrolled.
For chemical absorption, typically aqueous amine solutions (mono- or di ethanol amine (MEA, DEA), N-methyl-diethanol amine (MDEA, e.g.) or hot-potash (Benfield or Catacarb) are used.

Physical absorption normally provides higher absorption capacity, hence lower pump rates are needed, but hydrocarbons (particularly higher ones) are co-absorbed. Typical substances used are methanol, alkyl-pyrrolidin or derivates of etherificed polyethyleneglycol. Hybrid processes utilise a mixture of physical (e.g. sulfolane) and chemical (e.g. MDEA or di-isopropanol-amine (DIPA)) absorption agents for higher partial pressures.

Using membranes is a quite young technique and can further be used for separation of different hydrocarbons but for sour gas separation they are not 100% selective, therefore causing a non-compliance of sales-gas specifications. "Fouling", contamination of the membranes, is a further disadvantage.

It is known that ionic liquids (ILs) absorb CO₂. Absorbing ILs were published in several journals in numerous publications, when the industry realised, that green chemistry has a future and the Kyoto protocol started.

A real flood of investigation was done in [BF₄]-, [bis(trifluoromethylsulfonyl) imide]- (which is often abbreviated as [NTf₂]⁻) and [PF₆]⁻ anions, mostly in combination with imidazolium based cations. Although, the synthesis is quite easy, the big drawbacks are high viscosity, instability to hydrolysis and resulting fluorinated decomposition products.

Generally, one can say, that most of the residual ILs will not come in focus for industrial application, because they are only synthesisable on laboratory scale. Shifflet et al. (J. Chem. Eng. Data 2009, Vol.54, p.108-114) was the first who used imidazolium-based carboxylates for carbon dioxide absorption. More exactly, the article discloses the use of a [EMIM acetate - EMIM trifluoroacetate (TFA)] mixture for the absorption of carbon dioxide. It can only be guessed, why no other research group intensified their focus on to this group of compounds, because they show high potential according to the Henry's coefficients.
According to the generally accepted literature (e.g. Wasserscheid, Peter; Welton, Tom (Eds.); "Ionic Liquids in Synthesis", Wiley-VCH 2008; ISBN 978-3-527-31239-9) Ionic Liquids are melts of low melting salts with melting points equal or below 100°C. These ionic liquids exhibit some very interesting characteristics, e.g. having a very low, virtually non measurable, vapor pressure, a large liquidus range, good electrical conductivity and interesting solvation characteristics. These characteristics may predestine ionic liquids for several applications, e.g. as solvents (for example, in organic or inorganic synthesis, transition metal catalysis, biocatalysis, multiphase reactions, photochemistry, polymer synthesis, and nanotechnology), extracting agent (e.g. liquid-liquid or liquid gaseous extraction, sulphur removal during crude oil processing, removal of heavy metals during water processing and liquid membrane extraction), electrolytes (for example, in batteries, fuel cells, capacitors, solar cells, sensors, electroplating, electrochemical metal processing, electrochemical synthesis, and nanotechnology), lubricants, thermofluids, gels, reagents for organic synthesis, in the so-called "green chemistry" (e.g. as replacement for volatile organic compounds), antistatic addtives, specific applications in chemical analysis (e.g. gas chromatography, mass spectroscopy, capillary zone electrophoresis), liquid crystals, etc..
However, the melting temperature of ≤100°C is chosen arbitrarily by definition, therefore according to this application salts with melting temperatures >100°C but <250°C are included as well. The term "ionic liquid" may particularly include all liquid organic salts and mixtures of salts consisting of organic cations, organic anions or inorganic anions. Moreover additional salts with inorganic cation and organic or inorganic anion can be dissolved in the ionic liquid, containing but definitely not limited to the identical anion or identical anions as found in the basic ionic liquid. Moreover small amounts of additives may be dissolved in the ionic liquid. Furthermore, the ionic liquids may have a melting point of less than 250°C and in particular, less than 100°C and preferably less than room temperature.
To permit an industrial application of ILs, a high quality and high purity liquid is necessary. ILs, synthesised by metathesis, have a high amount of residual chloride (Cl⁻). The inventors of the present invention discovered that when these ILs are used for CO₂ capture, no solid precipitation occurs. However, when ILs having no residual chloride are used, in order to keep steel corrosion low, solid precipitation occurs, which is a considerable disadvantage to CO₂ removal. In industrial dynamic applications, where liquids should be pumped, an uncontrolled solidification of the washing media is undesired.

It is therefore the problem of the present invention to develop a method or procedure, which combines both, the high quality production and the prevention of the crystallisation process, when getting in intensive contact with CO₂.

The object of the present invention is met in a process for separating CO₂ from a gaseous stream containing the same by chemisorption to 1-ethyl-3-methylimidazolium (emim) or 1-propyl-3-methylimidazolium (pmim), which is characterized in that emim or pmim are present as carboxylate salt and that chemisorption is carried out in the presence of 1-butyl-3-methylimidazolium (bmim) acetate.

In a preferred embodiment of the inventive process the carboxylate is acetate.

A further preferred embodiment of the process according to the invention is characterized in that chemisorption is carried out in the presence of bmim acetate and water.

The inventive process can be used to separate CO₂ from various gases containing CO₂, such as natural gas, gases produced by reforming a carbon source with water, synthetic gas, illuminating gas, town gas, city gas, fuel gas, combustion gas, gases stemming from gasification of solid fester fuels, gases from water gas shift reactions, water gas and biogas. The process can also be used to separate CO₂ from inert-gas streams (e.g. N₂).

In the following, preferred embodiments of the invention are described in more details.

Experiment Description:
All used and described Ionic Liquids (ILs) were synthesised according to WO 2005/021484, if not announced differently.

At atmospheric conditions (pressure between 960-980mbar(a), temperature between 20-23°C), a known amount (5-10g) of IL was weighed in a 20ml gastight flask, with a magnetic stirring bar. Via a septum on top of the flask, it is possible to pierce it with a syringe to allow a bubbling of gaseous carbon dioxide (quality 4.5, Air Liquide) through the IL.

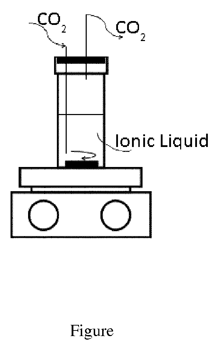

The experiments were carried out in the apparatus shown in the figure.

Configuration for lL/CO₂ crystallisation research

Gaseous carbon dioxide was bubbled through the IL under constant stirring (∼500rpm) at around 1 to 1.5 bar(a) and a flowrate of 50ml/min. CO₂ is absorbed on the IL, residual CO₂ is allowed to leave via a second syringe.

After one hour following ILs turned solid:

| ***Abbreviation*** | ***IUPAC name*** |
|---|---|
| [dmim][OAc] | 1,3-Di-Methyl-Imidazolium Acetate |
| [emim][OAc] | 1-Ethyl-3-Methyl-Imidazolium Acetate |
| [pmim][OAc] | 1 -Propyl-3-Methyl-Imidazolium Acetate |

Furthermore, it was observed, that [emim][OAc] synthesised by metathesis (via [emim][X] by anion exchange) did not turn solid, but it did, when it was prepared according to WO 2005/021484. It is known, that the chloride content of the last mentioned is nearly negligible. Different amounts ([emim][Cl] and NaCl, each with 1 and 5 wt%) of possible *reactants were added to [emim][OAc], synthesised according to WO 2005/021484 and CO₂ was bubbled through for several hours. Afterwards, it was left to stand for one week.

| ***Additive*** | ***Total amount [wt%]*** | ***Amount of Cl- [wt%]*** | ***Result after 1 hour*** |
|---|---|---|---|
| [emim][Cl] | 1,16 | 0,28 | Solid |
| [emim][Cl] | 4,97 | 1,19 | Liquid |
| NaCl | 4,43 | 2,67 | Solid |
| NaCl | 1,02 | 0,62 | liquid |

To prevent the crystallisation process, following mixtures of ILs were successfully tested, as explained above:

| ***Ionic Liquid*** | ***Additive*** | ***wt% Add.*** | ***wt% Water*** | ***Time*** | ***Observation*** |
|---|---|---|---|---|---|
| [emim][OAc] | [bmim][OAc] * | 20 | 0,5 | 4h | liquid |
| [emim][OAc] | [bmim][OAc] * | 20 | 2,4 | 4h | liquid |
| [emim][OAc] | [bmim][OAc] * | 20 | 6,3 | 4h | liquid |
| [emim][OAc] | [bmim][OAc] * | 30 | 0,8 | 8h | liquid |
| [emim][OAc] | [bmim][OAc] * | 30 | 2,4 | 8h | liquid |
| [emim][OAc] | [bmim][OAc] * | 30 | 7,3 | 8h | liquid |
| [emim][OAc] | [bmim][OAc] * | 30 | 1,2 | 24h | liquid |
| [emim][OAc] | [bmim][OAc] * | 30 | 4,6 | 24h | liquid |
| [emim][OAc] | [bmim][OAc] * | 30 | 5,5 | 24h | liquid |
| [emim][OAc] | [bmim][OAc] * | 30 | 8,5 | 24h | liquid |
| [emim][OAc] | [bmim][OAc] * | 30 | 0,3 | 24h | liquid |
| [emim][OAc] | [bmim][OAc] * | 30 | 5,5 | 168h | liquid |
| [emim][OAc] | [bmim][OAc] * | 30 | 8,5 | 168h | liquid |
| [emim][OAc] | [bmim][OAc] * | 30 | 0,3 | 168h | liquid |
| [emim][OAc] | [bmim][OAc] | 30 | 0,4 | 168h | liquid |
| [emim][OAc] | [bmim][OAc] | 30 | 4,3 | 168h | liquid |
| [emim][OAc] | [bmim][OAc] | 30 | 8,7 | 168h | liquid |
| [emim][OAc] | [Guanidine][OAc]^{§} | 10 | 0,3 | 168h | liquid |
| [emim][OAc] | [Guanidine][OAc]^{§} | 7,01 | 0,3 | 168h | liquid |
| [emim][OAc] | [Guanidine][OAc]^{§} | 8,91 | 0,3 | 168h | liquid |

| | | | | | |
|---|---|---|---|---|---|
| * via [bmim][X] by anion exchange, it cannot be excluded, that residual [bmim][X] or X⁻ are still present, which prevents crystallisation. ^{§} not according to the present invention. | | | | | |

## Claims

1. Process for separating CO₂ from a gaseous stream containing the same by chemisorption to 1-ethyl-3-methylimidazolium (emim) or 1-propyl-3-methylimidazolium (pmim), **characterized in that** emim or pmim are present as carboxylate salt and that chemisorption is carried out in the presence of 1-butyl-3-methylimidazolium (bmim) acetate.

2. Process according to claim 1, wherein the carboxylate is acetate.

3. Process according to claims 1 or 2, wherein that chemisorption is carried out in the presence of bmim acetate and water.

## Patentansprüche

1. Verfahren zum Abtrennen von CO₂ aus einem Gasstrom, welcher dasselbe enthält, mittels Chemisorption an 1-Ethyl-3-methylimiazolium (Emim) oder 1-Propyl-3-methylimidazolium (Pmim), **dadurch gekennzeichnet, dass** Emim oder Pmim als Carboxylatsalz vorliegen und die Chemisorption in Anwesenheit von 1-Butyl-3-methylimidazolium (Bmim) Acetat durchgeführt wird.

2. Verfahren nach Anspruch 1, wobei das Carboxylat ein Acetat ist.

3. Verfahren nach Ansprüchen 1 oder 2, wobei die Chemisorption in Anwesenheit von Bmim Acetat und Wasser durchgeführt wird.

## Revendications

1. Procédé pour séparer CO₂ d'un courant gazeux contenant le même par chimisorption à 1-Ethyl-3-méthylimidazolium (emim) ou 1-Propyl-3-méthylimidazolium (pmim) **caractérisé en ce que** emim ou pmim sont présents comme sel carboxylique et que la chimisorption est effectuée en présence d'acétate de 1-Butyl-3-méthylimidazolium (bmim).

2. Procédé selon la revendication 1, **caractérisé en ce que** le sel carboxylique est un acétate.

3. Procédé selon les revendications 1 ou 2, **caractérisé en ce que** la chimisorption est effectuée en présence d'acétate de bmim et d'eau.
